# EUROPEAN PATENT SPECIFICATION

(11) **EP 2 668 469 B1**
(45) Date of publication and mention of the grant of the patent: **26.04.2017**
(21) Application number: 12739789.1
(22) Date of filing: 23.01.2012
(51) Int. Cl.: G01B 21/20, A01B 63/00, A01B 71/02, A01C 5/06, A01B 63/111

(54) **AGRICULTURAL EQUIPMENT AND METHOD OF WORKING SOIL**
LANDWIRTSCHAFTLICHE AUSRÜSTUNG UND VERFAHREN ZUR BODENBEARBEITUNG DAMIT
ÉQUIPEMENT AGRICOLE ET PROCÉDÉ DE TRAVAIL DU SOL

(30) Priority: 26.01.2011 SE 1150057
(43) Date of publication of application: 04.12.2013
(73) Proprietor: Väderstad Holding AB, 590 21 Väderstad (SE)
(72) Inventor: ANDERSSON, Leif, S-387 93 Borgholm (SE); THYLÉN, Lars, S-582 21 Linköping (SE)
(74) Representative: Awapatent AB
(86) International application number: PCT/SE2012/050059
(87) International publication number: WO 2012/102667

(56) References cited:
- EP-A1- 0 254 984
- EP-A1- 0 459 336
- EP-A1- 0 776 598
- EP-A2- 0 177 024
- EP-A2- 0 260 113
- EP-B1- 1 349 442
- EP-B1- 1 349 442
- DE-A1-102004 048 759
- DE-A1-102004 048 759
- GB-A- 2 184 331
- GB-A- 2 290 935
- JP-A- 2 167 003
- JP-A- 2 167 003
- US-A1- 2010 319 941

## Description

### Technical Field

The present document relates to soil-working agricultural equipment or implements, and in particular to soil-working agricultural implements of the kind that are intended to create a predetermined pattern on the soil surface.

More specifically, the document concerns soil-working agricultural implements that are provided with levelling means adapted to level the soil after it has been worked by tools leaving a groove that extends parallel to the direction of travel of the agricultural implement.

### Background Art

When working the soil by means of agricultural implements, it is sometimes desirable to produce a predetermined pattern on the soil surface. For example, it may be desirable to produce a soil surface that is as plane as possible, i.e. where the variations in surface height across the width of the agricultural implement are as small as possible.

In other applications, however, it may be desirable to actually produce a height variation across the width of the agricultural implement, for instance in the form of ridges and/or furrows that extend in the direction of travel of the agricultural implement.

Some agricultural implements have special levelling tools, which can be arranged at the rear end of the agricultural implement, as viewed in its direction of travel.

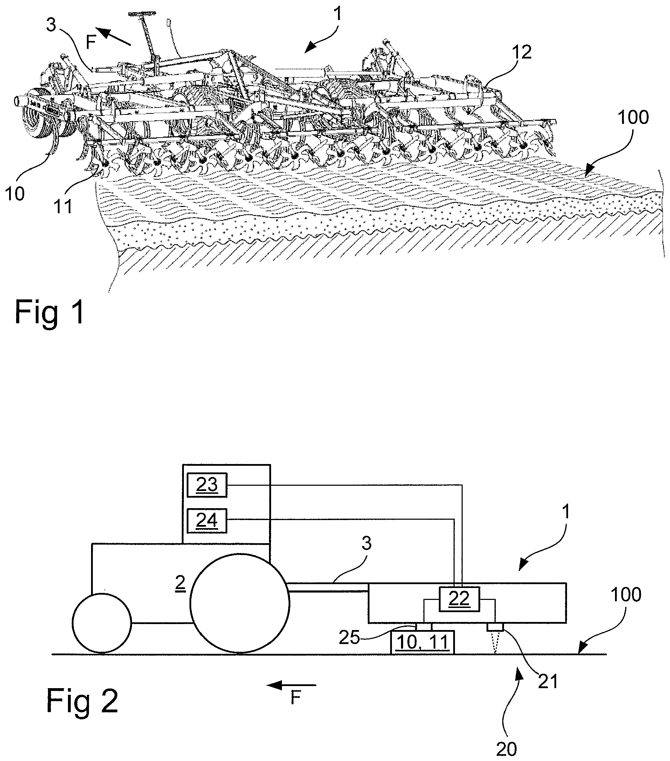

For example, a cultivator, which the applicant sells under the name of "TopDown", has at the rear end a row of levelling means in the form of inclined and rotatable discs, also referred to as "serrated discs". Such serrated disc can also be found at the rear end of the agricultural implement shown in Fig. 1. In the place of serrated discs, ordinary harrow discs or sowing discs can be used as levelling means. Alternatively, any kind of rake or rake-type tool can be used.

The rear levelling discs of a TopDown levels out all soil mounds left by the last row of cultivating tines. These discs are mounted on rubber suspension, which ensures satisfactory levelling of the soil surface while reducing the sensitivity to stone impacts.

The levelling discs can be steplessly controlled by means of hydraulics from the tractor driver's cab during operation. With this kind of technical solution, it is easier to adapt the degree of levelling to the conditions in individual fields and to the amount of coarse material on the soil surface.

Should the levelling discs be positioned too high relative to the ground surface, the furrows and ridges created by the last row of tines will be largely unaffected. However, if the levelling discs are positioned too low relative to the ground surface, new furrows and ridges will be created by the levelling discs.

Adjusting of the levelling discs requires, however, that the levelled soil is inspected, which is difficult to do from the tractor driver's cab, since the surface in question is often at least ten metres behind the tractor, and the observation position of the driver is usually situated a couple of metres above the ground surface, which makes it difficult to perceive the shape of the levelled soil. This means that the driver must stop the tractor and walk to a position behind the implement in order to inspect the shape of the levelled soil, whereupon the settings are changed, the tractor and implement are advanced a certain distance and a new inspection is made. This procedure is then repeated the number of times required to obtain an acceptable setting, and possibly an additional number of times, since conditions may vary between different sections of a field.

There is thus a need for solutions that may facilitate the setting of soil-working tools, such as levelling means, of an agricultural machine.

### Summary of the Invention

An object of the present document is to reduce or eliminate the problems associated with prior art.

A particular object is to make it easier for a user to achieve a desired surface evenness.

The invention is defined by the appended independent claims. Embodiments of the invention will be apparent from the dependent claims, from the following description and the appended drawings.

According to a first aspect, an agricultural implement is provided comprising at least one soil-working tool and at least one tool with mainly a levelling function, arranged to work soil across which the agricultural implement is moved. The agricultural implement further comprises a surface evenness sensor for sensing a surface evenness of said soil after being worked by said soil-working tool and levelled by said levelling tool as well as an indicator connected to the surface evenness sensor and arranged to provide an indication of said surface evenness.

The surface evenness sensors are situated behind the row of tools that are arranged to achieve the desired surface evenness, as viewed in the direction of travel.

By sensing the surface evenness and providing an indication thereof, it is possible also for a user located at a distance from the worked soil to continuously keep track of the surface evenness obtained. Alternatively, it is possible to supply the indication to a control unit for controlling the tool in response to the surface evenness and/or for presenting the information to the user.

The agricultural implement can be of a kind that, in use, creates at least two furrows which extend in a direction of travel and which are separated by a ridge, said surface evenness sensor being arranged to sense a difference in height between a bottom portion of one of said furrows and a top portion of said ridge.

By measuring the difference in height between the bottom portion and the top portion, a measurement of the surface evenness that is useful in practice as well as intuitive is provided.

The surface evenness sensor can comprise first sensing means arranged to sense said bottom portion and second sensing means arranged to sense said top portion.

By providing different sensing means for the bottom portion and the top portion, respectively, a simple and robust measuring device can be achieved.

The agricultural implement can further comprise a control unit arranged to receive a signal from said surface evenness sensor and, based on the signal, provide an indication of said surface evenness to a user and/or an external unit, such as a processing unit or an actuator.

By providing a control unit a flexible system can be achieved, which permits the processing and presentation of collected sensor data.

The control unit can be arranged to provide a control signal for setting a position of the tool.

By having the control unit supply a control signal for setting the position of the tool, it is possible to obtain an agricultural implement that automatically sets the correct tool position and, thus, maintains a desired surface evenness.

In addition, it is possible to integrate both the sensing and the controlling function in a single control unit for the whole agricultural implement.

The indicator can be arranged to indicate said surface evenness to a user.

By providing an indication to the user, said user is able to decide whether or not an adjustment of the tool is necessary. Such an indication is also suitable for simple agricultural implements, which already have an actuator for remotely controlling the tool height, and where it is desirable to add a sensor and an indicating device.

The surface evenness sensor can comprise at least one contactless distance measuring unit.

The functioning of contactless distance measuring units is well known and they are subjected to relatively little wear.

Alternatively, or a as complement, the surface evenness sensor can comprise engagement means adapted to engage with the soil surface.

Certainly, surface evenness sensors that engage with the soil surface can to some degree be subjected to wear, but on the other hand they can be made wholly mechanical, which means that there is no need to electrify the agricultural implement.

According to a second aspect, there is provided a method for working soil by means of an agricultural implement comprising at least one soil-working tool and at least one tool with mainly a levelling function. The method comprises continuously sensing a surface evenness of the soil, after the soil has been worked by said soil-working tool and levelled by said levelling tool and adjusting, based on said sensing, a position of the tool.

### Brief Description of the Drawings

Fig. 1 shows an agricultural implement known in the art, as viewed from behind.
Fig. 2 is a schematic view of a system comprising a tractor 2 and an agricultural implement 1 as well as a surface evenness sensor 20.
Fig. 3 is a schematic view of a surface evenness sensor according to a first embodiment.
Fig. 4 is a schematic view of a surface evenness sensor according to a second embodiment.
Fig. 5 is a schematic view of a fully mechanical surface evenness sensor, which is based on the second embodiment.

### Description of Embodiments

Fig. 1 shows a prior-art agricultural implement 1 in the form of a cultivator, which agricultural implement is intended to be towed, via a connecting device, behind a towing vehicle, such as a tractor 2. The agricultural implement 1 has a frame 12, a plurality of cultivating tines 10 and a set of levelling discs 11, which are arranged at the rear end, as viewed in the direction of travel F of the agricultural implement.

Referring to Fig. 2, a system is shown which comprises a tractor 2 connected to an agricultural implement 1, which has soil-working tools 10, 11, a rearmost row of which consists of special levelling means 11, and which is provided with a surface evenness sensor 20 for detecting the surface evenness, as will be described in more detail below.

The surface evenness sensor 20 comprises a detector 21 and can be part of a system comprising a control unit 22, a presentation unit 23, an input unit 24 and an actuator 25.

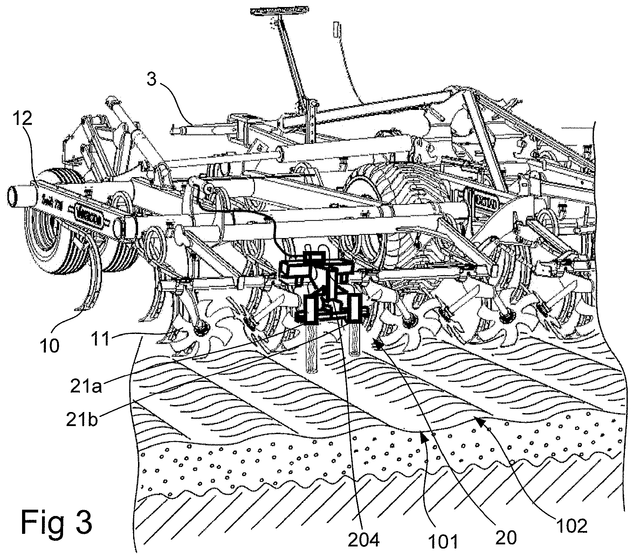

Referring to Fig. 3, an embodiment is shown in which a contactless detector 21 is used. The contactless detector can use, for example, ultrasound, radar or laser light to measure the distance between the detector and the soil surface. Furthermore, the detector 21 can comprise first 21 a and second 21 b detectors, respectively. The first detector 21 a can be arranged at a position right behind, for example, one of the tines 10 of the rearmost row, for the purpose of measuring the distance to a bottom portion of a furrow formed by the tine 10. The second detector 21 b can be arranged at a position right between two tines, for the purpose of measuring the distance to a top portion of a ridge formed by the tines.

The difference between the measurements from the first 21 a and second 21b detectors, respectively, indicates the surface evenness.

The detector 21, 21 a, 21 b can comprise a transmitter for transmitting radar, ultrasound or laser light and a receiver for receiving radar, ultrasound and laser light, respectively. Distance detectors of this kind are known in the art and need not be described in further detail. For example, ultrasound detectors of the kind that serves as parking assistance means on cars can be utilized.

The transmitter and the receiver can be integrated in a physical unit, which can be arranged on an arm projecting from the agricultural machine. The arm can extend downwards toward the soil surface. The detectors 21 a, 21b can each be arranged on a separate arm.

It is also possible to provide a distance sensor based on camera technology, for example stereo camera technology. Another alternative is to use a camera that registers a pattern of light projected onto the soil surface.

The control unit 22 can be arranged to receive signals from the different detectors 21, 21 a, 21 b. The signals can be forwarded to the presentation unit 23, which displays the signals to the user, for instance in the tractor driver's cab. In one embodiment, the signal can be presented in the form of a so-called diode column, where the surface evenness is indicated by lights that are selectively switched on and off with respect to a zero position. The zero position can represent a plane soil surface or a predetermined surface evenness. In another embodiment, the signal can be presented on a screen, either in the form of a diode column, as values or in the form of a diagram. In such an embodiment, it is possible to show both instantaneous values (the diode column) and historical data/trends.

Based on what is shown on the presentation unit 23, the user can control, via the input unit 24, an actuator 25, which sets the position of the tool 10, 11. The actuator can be hydraulically, pneumatically, electrically or mechanically operable. For example, the actuator can be of the type utilized in the TopDown agricultural implement described above.

In one embodiment, the input unit 24 and the actuator 25 can be connected to the control unit 23. In such an embodiment, the input unit 24 and the presentation unit 23 can be formed integrally with each other, for instance in the form of a touch screen.

In another embodiment, the input unit 24 and the actuator 25 can form parts of a separate system, which is not part of a system comprising the surface evenness sensor 20, the control unit 22, if any, and the presentation unit. For example, the input unit 24 and the actuator 25 can be of the type utilized in the TopDown agricultural implement described above.

In one embodiment, activation of the actuator 25 and, thus, adjustment of the tool 10, 11 can be effected via the input unit 24 only. This can be done after the user has noted that the presentation unit 23 indicated an undesired surface unevenness.

In yet another embodiment, activation of the actuator 25, and, thus, adjustment of the tool 10, 11, can be achieved automatically via the control unit 22 in response to the signal from the detector 21, 21 a, 21 b indicating a surface evenness that differs from a predetermined value. In such an embodiment, the user can be given the possibility of setting a desired surface evenness, which the control unit 22 then seeks to maintain.

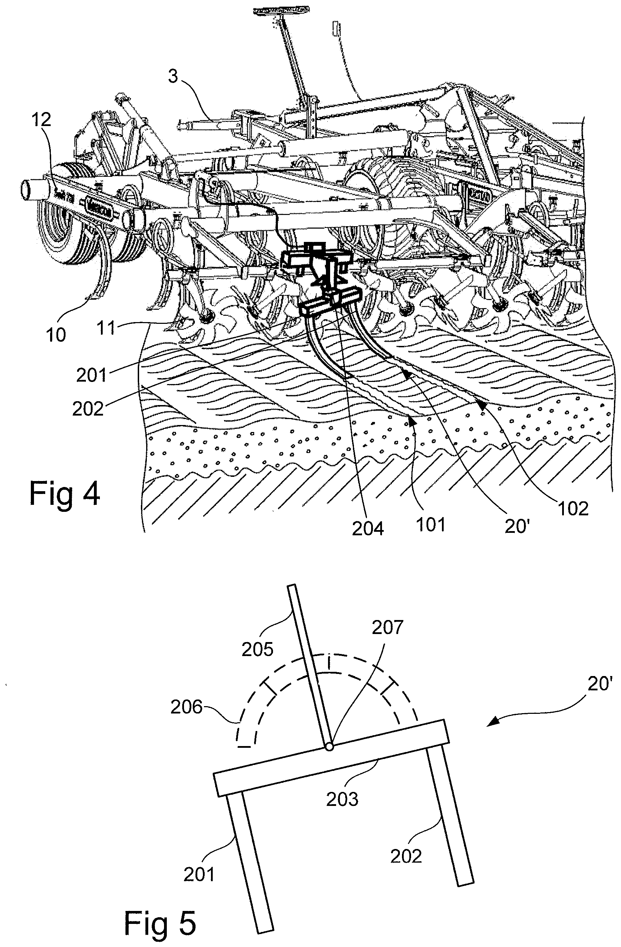

Referring now to Fig. 4, an embodiment utilizing engagement with the soil surface will be described. The surface evenness sensor 20' here comprises a pair of trailing arms 201, 202, which each have a free end arranged to engage with the soil surface and an attachment end by means of which the trailing arms are attached to a yoke or a crossbeam 203. The trailing arms 201, 202 can be made of a flexible material, such as plastic, rubber or sheet metal. They can be adapted to have a rectangular contact surface (for example 5-30 cm) with the ground. The crossbeam 203 is in turn rotatable about a centre of rotation 207 relative to a base part 204, which in turn is attached to the frame of the agricultural implement. The attachment of the trailing arms 201, 202 to the crossbeam can be adjustable for enabling measuring at different widths. Alternatively, the length of the crossbeam can be adjustable, for example in a telescopic manner. According to yet another variant, the crossbeam and the trailing arms can be exchangeable.

As an alternative to the trailing arms, some form of wheels or runners can be used.

The crossbeam can be rotatably mounted and provided with an angle sensor, which in turn supplies a signal to a control unit 22 according to that which has been described above. Angle sensors are known per se.

Referring to Fig. 5, it is possible to provide a wholly mechanical surface evenness sensor 21' by connecting a pointer 205 to the crossbeam 203 and arranging a fixed or adjustable reference 206 on the base part 204 or the frame of the agricultural implement. By observing the position 205 of the pointer relative to the reference 206, the user is able to determine whether the surface evenness is in accordance with the desirable surface evenness or if it deviates from it. The user is then able to adjust the tool 10, 11, as has been described above.

It will be appreciated that a large number of embodiments can be achieved within the scope of the invention as defined in the appended claims. For example, an agricultural machine can be provided with a single surface evenness sensor, in which case adjustment of all the tools of the agricultural machine can be effected based on the surface evenness sensor.

In another embodiment, the agricultural implement can comprise two, three or more sections, which can be side sections and/or sections separated in the longitudinal direction, each section having a set of tools and a surface evenness sensor and the set of tools of each section being individually adjustable.

Furthermore, sensing and adjustment for each individual tool can be provided.

It will further be appreciated that the invention can be applied for setting the working depth of tools 10, 11 in the form cultivating teeth 10, cutting blades, harrow tines, knifes (not shown), teeth supporting levelling means (such as Crossboard® teeth, not shown), seed knives (not shown), compactor parts (not shown), serrated discs, seed discs (not shown) or other disc tools and rakes (not shown).

The invention is particularly suited for the adjustment of tools 11 that have mainly a levelling function, and that are intended to level the soil surface after the soil has been worked by one or more tools 10, which mainly have a loosening, ploughing or cutting function.

It will further be appreciated that the invention can be used on purely soil-working agricultural implements as well as on agricultural implements which combine soil-working with, for example, seeding or planting.

The control unit can be of a simpler or a more complex type. In one embodiment, the control unit can comprise a processing unit while, in another embodiment, said unit can be substantially lacking. It will be appreciated that an electronic indication of the surface evenness can be achieved without a control unit, for example by a detector 21, 21 a, 21 b or an angle sensor directly supplying a signal representing the difference in height between the bottom portion and the top portion.

In one embodiment, the control unit can be arranged on the agricultural implement and can also constitute the control unit for other functions of the agricultural implement.

In yet another embodiment, the control unit can be arranged on the towing vehicle, and can also constitute the control unit for other functions of the agricultural implement and/or the towing vehicle.

The agricultural implement can be used in a method of working soil 100, in which the surface evenness of the soil 100 is continuously sensed immediately (i.e. with the same device) after the soil has been worked and in which, based on said sensing, the position of the tool is adjusted.

## Claims

1. An agricultural implement (1), comprising at least one soil-working tool (10) and at least one tool (11) with mainly a levelling function, arranged to work soil (100) across which the agricultural implement is moved, **characterised by**
a surface evenness sensor (20) for sensing a surface evenness of said soil (100) after being worked by said soil-working tool (10) and levelled by said levelling tool (11), and
an indicator (23, 205) connected to said surface evenness sensor (20) and arranged to provide an indication of said surface evenness.

2. An agricultural implement according to claim 1, wherein the agricultural implement (1) is of a kind that, in use, creates at least two furrows which extend in a direction of travel and are separated by a ridge, and wherein said surface evenness sensor (20) is arranged to sense a difference of height between a bottom portion (101) of one of said furrows and a top portion (102) of said ridge.

3. An agricultural implement according to claim 2, wherein said surface evenness sensor comprises first sensing means (21a, 201) arranged to sense said bottom portion (101) and second sensing means (21 b, 202) arranged to sense said top portion (102).

4. An agricultural implement according to any one of the preceding claims, further comprising a control unit (22) arranged to receive a signal from said surface evenness sensor (20, 21) and, based on the signal, provide an indication of said surface evenness to a user and/or to an external unit (23, 25).

5. An agricultural implement according to claim 4, wherein the control unit (22) is arranged to provide a control signal for setting a position of the tool (10, 11).

6. An agricultural implement according to any one of the preceding claims, wherein said indicator (23, 205) is arranged to indicate said surface evenness to a user.

7. An agricultural implement according to any one of the preceding claims, wherein said surface evenness sensor (20) comprises at least one contactless distance measuring unit (21 a, 21 b).

8. An agricultural implement according to any one of claims 1-6, wherein said surface evenness sensor (20) comprises engagement means (201, 202) adapted to engage with the soil surface.

9. A method for working soil by means of an agricultural implement (1) comprising at least one soil-working tool (10) and at least one tool (11) with above all a levelling function,
**characterised by**
continuously sensing a surface evenness of the soil (100) after the soil has been worked by said soil-working tool (10) and levelled by said levelling tool (11), and
adjusting, based on said sensing, a position of the tool (10, 11).

## Patentansprüche

1. Landwirtschaftliches Gerät (1), das wenigstens ein Bodenbearbeitungswerkzeug (10) und wenigstens ein Werkzeug (11) mit hautsächlich einer planierenden Funktion umfasst, dafür angeordnet, Boden (100) zu bearbeiten, über den das landwirtschaftliche Gerät bewegt wird, **gekennzeichnet durch**
einen Oberflächenebenheitssensor (20) zum Abfühlen einer Oberflächenebenheit des Bodens (100), nachdem er **durch** das Bodenbearbeitungswerkzeug (10) bearbeitet und **durch** das Planierungswerkzeug (11) planiert ist, und
einen Anzeiger (23, 205), der mit dem Oberflächenebenheitssensor (20) verbunden und dafür angeordnet ist, eine Anzeige der Oberflächenebenheit bereitzustellen.

2. Landwirtschaftliches Gerät nach Anspruch 1, wobei das landwirtschaftliche Gerät (1) von einer Art ist, die bei Anwendung wenigstens zwei Furchen erzeugt, die sich in einer Bewegungsrichtung erstrecken und durch einen Kamm getrennt sind, und wobei der Oberflächenebenheitssensor (20) dafür angeordnet ist, einen Höhenunterschied zwischen einem unteren Abschnitt (101) einer der Furchen und einem oberen Abschnitt (102) des Kamms abzufühlen.

3. Landwirtschaftliches Gerät nach Anspruch 2, wobei der Oberflächenebenheitssensor erste Abfühlmittel (21 a, 201), die dafür angeordnet sind, den unteren Abschnitt (101) abzufühlen, und zweite Abfühlmittel (21 b, 202), die dafür angeordnet sind, den oberen Abschnitt (102) abzufühlen, umfasst.

4. Landwirtschaftliches Gerät nach einem der vorhergehenden Ansprüche, das ferner eine Steuereinheit (22) umfasst, die dafür angeordnet ist, ein Signal von dem Oberflächenebenheitssensor (20, 21) zu empfangen und, auf der Grundlage des Signals, eine Anzeige der Oberflächenebenheit für einen Benutzer und/oder für eine externe Einheit (23, 25) bereitzustellen.

5. Landwirtschaftliches Gerät nach Anspruch 4, wobei die Steuereinheit (22) dafür angeordnet ist, ein Steuersignal zum Festsetzen einer Stellung des Werkzeugs (10, 11) bereitzustellen.

6. Landwirtschaftliches Gerät nach einem der vorhergehenden Ansprüche, wobei der Anzeiger (23, 205) dafür angeordnet ist, die Oberflächenebenheit einem Benutzer anzuzeigen.

7. Landwirtschaftliches Gerät nach einem der vorhergehenden Ansprüche, wobei der Oberflächenebenheitssensor (20) wenigstens eine berührungslose Entfernungsmesseinheit (21 a, 21 b) umfasst.

8. Landwirtschaftliches Gerät nach einem der Ansprüche 1 bis 6, wobei der Oberflächenebenheitssensor (20) Eingriffsmittel (201, 202) umfasst, die dafür eingerichtet sind, mit der Bodenoberfläche ineinanderzugreifen.

9. Verfahren zum Bearbeiten von Boden mit Hilfe eines landwirtschaftlichen Geräts (1), das wenigstens ein Bodenbearbeitungswerkzeug (10) und wenigstens ein Werkzeug (11) mit vor allem einer planierenden Funktion umfasst,
**gekennzeichnet durch**
das kontinuierliche Abfühlen einer Oberflächenebenheit des Bodens (100), nachdem der Boden **durch** das Bodenbearbeitungswerkzeug (10) bearbeitet und **durch** das Planierungswerkzeug (11) planiert worden ist, und
das Einstellen, auf der Grundlage des Abfühlens, einer Stellung des Werkzeugs (10, 11).

## Revendications

1. Équipement agricole (1), comprenant au moins un outil de travail du sol (10) et au moins un outil (11) ayant principalement une fonction de nivelage, conçus pour travailler le sol (100) sur lequel l'équipement agricole est déplacé,
**caractérisé par**
un capteur de planéité de surface (20) pour détecter une planéité de surface dudit sol (100) une fois qu'il a été travaillé par ledit outil de travail du sol (10) et nivelé par ledit outil de nivelage (11), et
un indicateur (23, 205) connecté audit capteur de planéité de surface (20) et conçu pour donner une indication de ladite planéité de surface.

2. Équipement agricole selon la revendication 1, dans lequel l'équipement agricole (1) est de nature telle qu'il crée, en cours d'utilisation, au moins deux sillons qui s'étendent dans un sens de déplacement et sont séparés par une crête et dans lequel ledit capteur de planéité de surface (20) est conçu pour détecter une différence de hauteur entre une partie inférieure (101) d'un desdits sillons et une partie supérieure (102) de ladite crête.

3. Équipement agricole selon la revendication 2, dans lequel ledit capteur de planéité de surface comprend un premier moyen de détection (21 a, 201) conçu pour détecter ladite partie inférieure (101) et un second moyen de détection (21 b, 202) conçu pour détecter ladite partie supérieure (102).

4. Équipement agricole selon l'une quelconque des revendications précédentes, comprenant en notre unité de commande (22) conçue pour recevoir un signal dudit capteur de planéité de surface (20, 21) et, à partir du signal, donner une indication de ladite planéité de surface à un utilisateur et/ou à une unité externe (23, 25).

5. Équipement agricole selon la revendication 4, dans lequel l'unité de commande (22) est conçue pour fournir un signal de commande pour établir une position de l'outil (10,11).

6. Équipement agricole selon l'une quelconque des revendications précédentes, dans lequel ledit indicateur (23, 205) est conçu pour indiquer ladite planéité de surface à un utilisateur.

7. Équipement agricole selon l'une quelconque des revendications précédentes, dans lequel ledit capteur de planéité de surface (20) comprend au moins une unité de mesure de distance sans contact (21 a, 21 b).

8. Équipement agricole selon l'une quelconque des revendications 1 à 6, dans lequel ledit capteur de planéité de surface (20) comprend un moyen d'engagement (201, 202) apte à s'engager dans la surface du sol.

9. Procédé de travail du sol au moyen d'un équipement agricole (1) comprenant au moins un outil de travail du sol (10) et au moins un outil (11) ayant avant tout une fonction de nivelage,
**caractérisé par**
la détection continue d'une planéité de surface du sol (100) une fois que le sol a été travaillé par ledit outil de travail du sol (10) et nivelé par ledit outil de nivelage (11), et
l'ajustement, à partir de ladite détection, d'une position de l'outil (10, 11).
